# EUROPÄISCHE PATENTSCHRIFT

(11) **EP 2 909 789 B1**
(45) Veröffentlichungstag und Bekanntmachung des Hinweises auf die Patenterteilung: **15.03.2017**
(21) Anmeldenummer: 13783479.2
(22) Anmeldetag: 02.10.2013
(51) Int. Cl.: G06K 9/00, G06K 9/68, G06F 3/0488

(54) **KRAFTWAGEN MIT EINEM HANDSCHRIFTERKENNUNGSSYSTEM**
MOTOR VEHICLE HAVING A HANDWRITING RECOGNITION SYSTEM
VÉHICULE À MOTEUR ÉQUIPÉ D'UN SYSTÈME DE RECONNAISSANCE D'ÉCRITURE

(30) Priorität: 19.10.2012 DE 102012020610
(43) Veröffentlichungstag der Anmeldung: 26.08.2015
(73) Patentinhaber: Audi AG, 85045 Ingolstadt (DE)
(72) Erfinder: BOUAZIZ, Tahar, 85055 Ingolstadt (DE); BETZ, Michael, 85080 Gaimersheim (DE)
(74) Vertreter: Brandt, Kai
(86) Internationale Anmeldenummer: PCT/EP2013/002962
(87) Internationale Veröffentlichungsnummer: WO 2014/060068

(56) Entgegenhaltungen:
- DE-A1-102011 017 261
- US-A1- 2002 114 516
- US-A1- 2008 019 591
- US-A1- 2010 161 594
- US-A1- 2010 169 841

## Beschreibung

Die Erfindung betrifft einen Kraftwagen mit einer Eingabevorrichtung zum Bedienen eines elektronischen Geräts des Kraftwagens, beispielsweise eines Navigationssystems oder eines Infotainmentsystems. Mittels der Eingabevorrichtung kann beispielsweise in einer Navigationsdatenbank ein Ortsname durch händisches Zeichnen von Buchstaben auf eine Eingabefläche gesucht werden. Zu der Erfindung gehören auch eine Eingabevorrichtung mit einer Zeichen- oder Handschrifterkennung sowie ein Verfahren zum Betreiben der Eingabevorrichtung.

Eine solche Eingabeeinrichtung ist beispielsweise aus der EP 1 475 693 A2 oder US2002/0114516 bekannt. Danach gibt ein Benutzer einzelne Buchstaben jeweils durch Zeichnen einer Zeichenspur des Buchstabens auf einer Eingabefläche, beispielsweise einem Touchscreen, ein. Anhand der Zeichenspur wird dann durch eine Handschrifterkennungseinrichtung eine Zeichenerkennung durchgeführt und so das von dem Benutzer gemeinte Zeichen erkannt, hier also der Buchstabe. Die auf einem Bildschirm angezeigte Zeichenspur wird dann durch den erkannten Buchstaben ersetzt. Auf diese Weise kann der Benutzer handschriftlich Buchstabe für Buchstabe den Beginn eines Ortsnamens eingeben, der dann nach Möglichkeit auf der Grundlage einer Datenbanksuche automatisch vervollständigt wird, falls der Ortname anhand der bisher eingegebenen Buchstaben eindeutig bestimmt werden kann.

Problematisch bei der Verwendung von Handschrifterkennungssystemen ist, dass eine Zeichenspur nicht immer eindeutig einem bestimmten Zeichen zugeordnet werden kann. Zeichnet der Benutzer beispielsweise einen senkrechten Strich "I", so kann mit diesem Strich der Großbuchstabe I, der Kleinbuchstabe I oder auch die Zahl 1 gemeint sein. Ein Handschrifterkennungssystem gibt dann als Erkennungsergebnis dasjenige Zeichen aus, das im größten Maße mit der Zeichenspur übereinstimmt. Hat der Benutzer unsauber geschrieben und ist deshalb das Erkennungsergebnis falsch, wird unter Umständen in dem oben beschriebenen Fall die Eingabe des Benutzers automatisch zu einem Ortsnamen ergänzt, den der Benutzer gar nicht gemeint hat. Dem Benutzer ist hierbei dann nicht klar, warum die Eingabevorrichtung plötzlich diesen falschen Ortsnamen anzeigt.

Der Erfindung liegt die Aufgabe zugrunde, in einem Kraftwagen eine übersichtliche Gerätebedienung mittels einer Handschrifterkennung zu ermöglichen.

Die Aufgabe wird durch ein Verfahren gemäß Patentanspruch 1, eine Eingabevorrichtung gemäß Patentanspruch 6 sowie einen Kraftwagen gemäß Patentanspruch 7 gelöst. Vorteilhafte Weiterbildungen der Erfindung sind durch die Unteransprüche gegeben.

Nach dem erfindungsgemäßen Verfahren werden Mehrdeutigkeiten bei der Erkennung der Zeichenspur berücksichtigt. Das erfindungsgemäße Verfahren sieht entsprechend vor, durch eine Handschrifterkennungseinrichtung, also einer Zeichenerkennungseinrichtung zum Erkennen handschriftlich eingegebener Zeichen, zu einer mehrdeutigen Zeichenspur nicht nur dasjenige Erkennungsergebnis (also z.B. einen Buchstaben oder eine Zahl) zu ermitteln, welches die größte Übereinstimmung mit der Zeichenspur aufweist, sondern mehrere unterschiedliche Erkennungsergebnisse. In dem oben genannten Beispiel werden also zu einem vertikalen Strich "I" sowohl der Großbuchstabe I als auch der Kleinbuchstabe I, die Zahl 1 und eventuell noch der Großbuchstabe J als jeweils ein Erkennungsergebnis ermittelt. Die Anzeigeeinrichtung ist dann dazu ausgelegt, eine auf Grundlage der unterschiedlichen Erkennungsergebnisse gebildete Trefferliste anzuzeigen.

Die Trefferliste wird dabei nicht direkt aus den Erkennungsergebnissen selbst gebildet. Vielmehr wird mittels einer Datenbanksuche in zumindest einer Datenbank durch eine Sucheinrichtung zu jedem der unterschiedlichen Erkennungsergebnisse zumindest ein Datenbankeintrag gesucht. Mit anderen Worten wird also nach der Erkennung einer neuen Zeichenspur jeweils beispielsweise eine Ortsnamensuche in einer Navigationsdatenbank durchgeführt bzw. nach der Eingabe weiterer Zeichen verfeinert. Die Trefferliste wird dann aus den zu den unterschiedlichen Erkennungsergebnissen gefundenen Datenbankeinträgen gebildet. In der Trefferliste werden bevorzugt bei den einzelnen Treffern diejenigen Wortbestandteile besonders hervorgehoben (z.B. farblich oder durch Unterstreichen), auf die das System anhand der Handschrifteingabe gematched hat, also eine Übereinstimmung erkannt hat.

Mit Zeichen auf der Eingabefläche ist im Zusammenhang mit der Erfindung nicht gemeint, dass der Benutzer einen Strich mit einer Farbe malt. Vielmehr ist es ausreichend, wenn der Benutzer beispielsweise mit einem Finger über eine berührungsempfindliche Eingabefläche eines Touchpads, eines Touchscreens oder einer vergleichbaren Sensoranordnung streicht, welche beispielsweise kapazitiv oder optisch die von beispielsweise der Fingerkuppe zurückgelegte Bahn oder Trajektorie erfasst.

Eine einzelne Zeichenspur muss dabei nicht für ein ganzes Wort stehen. Die Zeichenerkennung kann bereits nach Eingabe jeweils einer Zeichenspur eines einzelnen Zeichens, also eines Buchstabens, einer Zahl oder auch eines Sonderzeichens (z.B. , ; - ! ?), durchgeführt werden oder aber auch nach Eingabe einer Zeichenspur einer Zeichengruppe aus mehreren Zeichen. Diese Zeichengruppe muss dabei nicht das vollständige Wort sein. So kann der Benutzer z.B. drei Zeichen nacheinander als eine Zeichenspur zeichnen, bevor die Zeichenerkennung für diese Zeichenspur beginnt. Die Zeichenspur muss nicht aus nur einem einzigen Strich bestehen. Der Benutzer kann so z.B. ein Wort Buchstaben für Buchstaben eingeben, wobei jeweils aufgrund von Mehrdeutigkeiten der einzelnen Zeichenspuren all diejenigen gefundenen Datenbankeinträge in der Trefferliste angezeigt werden, die sich auf die erkannte Buchstabenfolge lesen lassen. So könnte z.B. die Eingabe der beiden Zeichenspuren für "O" und "I" zu einer Trefferliste z.B. mit Ortsnamen und Telefonnummern führen, die jeweils eine der folgenden Zeichenfolgen beinhalten: "OI", "01", "ol" und "OJ".

Mit anderen Worten werden also bevorzugt durch die Erfassungseinrichtung mehrere Zeichenspuren nacheinander erfasst und hierbei nach dem Erfassen jeder der Zeichenspuren jeweils zunächst eine Zeichenerkennung zur aktuellen Zeichenspur durchgeführt und anschließend auf der Grundlage der Erkennungsergebnisse aller bisher erfassten Zeichenspuren die Datenbanksuche präzisiert, d.h. die Anzahl der gefundenen Datenbankeinträge wird mit jedem weiter eingegeben Zeichen nach Möglichkeit verringert. Indem nach Eingabe jeder Zeichenspur die Datenbanksuche weiter präzisiert wird, erkennt der Benutzer in vorteilhafter Weise, welches Zeichen von dem Handschriftenerkennungssystem als mehrdeutig erkannt wird.

Gemäß einer weiteren Ausführungsform des Verfahrens wird dabei die Datenbanksuche jeweils begonnen, sobald nach dem Erfassen der Zeichenspur ein vorbestimmtes Kriterium erfüllt ist. So kann beispielsweise vorgesehen sein, die Datenbanksuche zu beginnen, sobald der Benutzer ein Zeicheninstrument, also beispielsweise einen Finger oder einen Eingabestift, von der Eingabefläche abgehoben hat. Ein anderes geeignetes Kriterium besagt, dass für eine vorbestimmte Zeitdauer die Zeichenspur unverändert geblieben sein muss. Die Verwendung eines Kriteriums für den Beginn der Datenbanksuche weist den Vorteil auf, dass durch geeignete Kriterien festgelegt werden kann, wann die von der Anzeigeeinrichtung erzeugte Anzeige verändert wird. Geschieht dies zu früh, wird der Benutzer beim Zeichnen der Zeichenspur irritiert.

Wie bereits ausgeführt, können über das Eingabefeld durch den Benutzer sowohl Nummern als auch Buchstaben eingegeben werden. Die erfindungsgemäße Eingabevorrichtung erkennt dann nach einer Suche in Datenbanken des Systems (also z.B. einem Adressbuch, einer Favoritenliste mit einer Auswahl besonders häufig benutzter Datenbankeinträge, einer Datenbank für Telefonnummern), ob der Benutzer gerade einen bekannten Kontakt sucht oder ob er eine neue Telefonnummer eingeben möchte. In diesem Zusammenhang sieht eine vorteilhafte Weiterbildung der Erfindung vor, dass jede erfasste Zeichenspur zusätzlich einer weiteren Handschrifterkennungseinrichtung zugeführt wird, welche ausschließlich eine Zeichenerkennung für eine neue Telefonnummerneingabe durchführt, also ein auf das Erkennen von Telefonnummern spezialisierte Handschrifterkennung. Das Erkennungsergebnis dieser zweiten Handschrifterkennungseinrichtung wird durch die Anzeigeeinrichtung als ein neuer Telefonnummerneintrag dargestellt. Die Trefferliste besteht somit aus zwei Bereichen: ein Bereich zeigt ständig eine eingegebene neue Telefonnummer, die sich auf die bisher eingegebenen Zeichenspuren lesen lässt. Ein zweiter Bereich zeigt die Liste mit gefundenen Datenbankeinträgen aus beispielsweise einer Adressdatenbank und einer Telefonnummerndatenbank. Der Benutzer kann dann aus der Trefferliste entweder die neue Nummer aus dem einen Bereich oder einen gefundenen Kontakt aus dem anderen Bereich auswählen. Diese Ausführungsform weist den Vorteil auf, dass der Benutzer gleich erkennen kann, ob die von ihm eingegebene Telefonnummer bereits in einer der Datenbanken gespeichert ist.

Die Verwendung zweier Handschrifterkennungseinrichtungen weist dabei den Vorteil auf, dass diese unterschiedlich konfiguriert sein können. Bei der Realisierung zweier unterschiedlicher Handschrifterkennungseinrichtungen kann hierbei allerdings auch auf ein einziges Handschrifterkennungssystem zurückgegriffen werden, welches abwechselnd mit unterschiedlichen Konfigurationen betrieben wird, um eine Zeichenerkennung zu einer bestimmten Zeichenspur durchzuführen.

Durch die unterschiedliche Konfiguration kann bei der zweiten Handschrifterkennungseinrichtung (diejenige für die Erkennung neuer Telefonnummern) erreicht werden, dass bei einer Mehrdeutigkeit der Zeichenspur eine Ziffernerkennung gegenüber einer Buchstabenerkennung bevorzugt wird. Gibt der Benutzer beispielsweise eine Zeichenspur "O" ein, so wird dies gemäß dieser Konfiguration bevorzugt als Null "0" und nicht als der Großbuchstabe "O" erkannt und ein entsprechendes Erkennungsergebnis ausgegeben. Ist also beispielsweise das Eingabefeld für die neue Telefonnummer noch leer, so werden bei nicht eindeutiger Eingabe von z. B. "I" von der zweiten Handschrifterkennungseinrichtung immer Ziffern höher priorisiert und in diesem Fall in die Zeile für die neue Telefonnummer eine Eins "1" eingefügt und nicht der Großbuchstabe "I". Die erste Handschrifterkennungseinrichtung kann dagegen sowohl "1" als auch z.B. "I" und/oder "J" oder auch den Kleinbuchstaben "I" ausgeben.

Allerdings kann es auch vorkommen, dass der Benutzer eine sogenannte Vanity-Nummer eingeben möchte, also eine Telefonnummer, die über eine Buchstabenfolge definiert ist. Beispielsweise kann eine solche Vanity-Nummer lauten: "0180AUDIHILFE". Wenn der Benutzer dabei z. B. eindeutig den Buchstaben "A" zur Eingabe einer solchen Vanity-Nummer schreibt, sollte auch das zweite Handschrifterkennungssystem den Buchstaben "A" in die Zeile für die neue Telefonnummer übernehmen. Dies wird in vorteilhafter Weise erreicht, indem die zweite Handschrifterkennungseinreichung die Ziffernerkennung zwar bevorzugt, aber eben auch eine Buchstabenerkennung durchführt.

Nach der Eingabe des ersten Buchstabens sollte dann die zweite Handschrifterkennungseinrichtung bei der Eingabe weiterer Zeichenspuren davon ausgehen, dass der Benutzer jetzt Buchstaben eingeben möchte, da Vanity-Nummern in der Regel eine Folge mehrerer Buchstaben umfassen. Gibt der Benutzer hierbei einen Buchstaben sehr unsauber ein, ist also die zugehörige Zeichenspur des Benutzers mehrdeutig, so sollte durch die zweite Handschrifterkennung hier eine robuste Erkennung eines weiteren Buchstabens erfolgen, und nicht eine Ziffer ausgegeben werden, so dass der .Benutzer ohne Schwierigkeiten auch in die Telefonzeile den Rest der Vanity-Nummer (im Beispiel also "UDIHILFE") eintragen kann. Hierzu sieht eine bevorzugte Ausführungsform des erfindungsgemäßen Verfahrens vor, bei einer eindeutigen Erkennung eines Buchstabens durch die zweite Handschrifterkennungseinrichtung (also in dem Beispiel das "A") die zweite Handschrifterkennungseinrichtung umzukonfigurieren und hierdurch eine zweite Konfiguration zu aktivieren, durch welche bei einer Mehrdeutigkeit der zu erkennenden Zeichenspur nun eine Buchstabenerkennung gegenüber einer Ziffernerkennung bevorzugt wird.

Die beschriebene Bevorzugung einer Ziffernerkennung gegenüber einer Buchstabenerkennung bzw. umgekehrt kann in einem Erkennungssystem beispielsweise durch einen Offset erreicht werden, welcher einem Wert für ein Ähnlichkeitsmaß für den jeweiligen Zeichentyp (Ziffer oder Buchstabe) zugeschlagen wird, wenn es um die Auswertung der Zeichenspur geht.

Für diese Ausführungsform muss dazu noch die "eindeutige" Erkennung definiert werden. Eine Erkennung eines Buchstabens kann dann als eindeutig angesehen werden, wenn beispielsweise ein Wert für das Ähnlichkeitsmaß zwischen einem in Frage kommenden Buchstaben und der Zeichenspur einerseits und ein Wert für das Ähnlichkeitsmaß zwischen einer in Frage kommenden Ziffer und der Zeichenspur andererseits trotz der Bevorzugung der Ziffer größer ist. "Eindeutig" kann auch derart definiert sein, dass eine Differenz der beiden Werte trotz der Bevorzugung der Ziffer durch den Offset dennoch kleiner als ein vorbestimmter Wert ist. Mit anderen Worten kann also eine Buchstabenerkennung als eindeutig angesehen werden, wenn trotz bevorzugter Ziffernerkennung als das wahrscheinlichste Zeichen immer noch der Buchstabe erkannt wird oder wenn eine bestimmte Ziffer und der Buchstabe als nahezu gleichwertige Erkennungsergebnisse angesehen werden.

Bei der Implementierung einer Telefonnummernerkennung mit Vanity-Nummern muss beachtet werden, dass eine Vanity-Nummer nicht zwangsläufig mit einer geschlossenen Buchstabenfolgen endet. Es kann auch vorkommen, dass nach einigen Buchstaben wieder eine Zahl in der Vanity-Nummer enthalten ist. Eine Ausführungsform des erfindungsgemäßen Verfahren berücksichtigt dies, indem die zweite Handschrifterkennungseinrichtung bei erneuter eindeutiger Erkennung einer Zahl rückkonfiguriert wird. Die Eindeutigkeit der Erkennung kann wieder wie im Zusammenhang mit der eindeutigen Erkennung eines Buchstabens definiert sein.

Auch bei der zweiten Handschrifterkennungseinrichtung kann vorgesehen sein, mehrere unterschiedliche Erkennungsergebnisse zu ermitteln und durch die Anzeigeeinrichtung dann auf der Grundlage der unterschiedlichen Erkennungsergebnisse nicht nur eine einzige neue Telefonnummer, sondern mehrere neue Telefonbucheinträge darzustellen. Gegebenenfalls kann hier vorgesehen sein, dass der Benutzer zwischendurch während der Eingabe oder auch nach Beendigung der Eingabe der gesamten Telefonnummer die richtige Telefonnummer auswählt und die übrigen Telefonnummern gelöscht werden. Die Darstellung der unterschiedlichen Erkennungsergebnisse weist den Vorteil auf, dass dem Benutzer klar wird, mit welcher Schreibweise das Erkennungssystem Probleme hat.

Eine weitere Ausführungsform des Verfahrens weist den Vorteil auf, dass der Benutzer ein erkanntes Zeichen manuell ändern kann und damit das Erkennungsverhalten einer der beiden Handschrifterkennungseinrichtungen beeinflussen. Hat der Benutzer beispielsweise einen vertikalen Strich "I" eingegeben und hat eine der Handschrifterkennungseinrichtungen z. B. eine Eins "1" erkannt, obwohl der Benutzer aber einen Großbuchstaben "I" eingeben möchte, so kann er die Erkennung korrigieren, indem er durch Löschen des erkannten Buchstabens und nochmaliges Eingeben des vertikalen Strichs "I" die Zeichenerkennung noch einmal wiederholen lässt. Bei einem erneuten Erkennen einer Zeichenspur mittels der Handschrifterkennungseinrichtung wird dann ein von dem gelöschtes Zeichen verschiedenes Zeichen als das Erkennungsergebnis bevorzugt. Das Handschrifterkennungssystem erkennt also durch das Löschen, dass nicht "1" von dem Benutzer gemeint war. Deshalb wird beim zweiten Mal und bei einer Eingabe einer ähnlichen Zeichenspur das nächstmögliche Zeichen als Ergebnis, also hier der Großbuchstabe "I", als Erkennungsergebnis ausgegeben. Für das Löschen selbst wird durch die Erfassungseinrichtung, also etwa das Touchpad, oder aber auch durch ein anderes Bedienelement, beispielsweise eine Löschtaste, ein vom Benutzer gegebener Löschbefehl zum Löschen des zuletzt eingegebenen Zeichens erfasst. Durch die Anzeigeeinrichtung wird dann das einzelne, falsch erkannte Zeichen gelöscht, damit das Zeichen noch mal eingegeben werden kann.

Im Folgenden werden noch weitere, nicht gesondert beanspruchte Ausführungsformen der Erfindung beschrieben, die sich auf die Suche in der Datenbank beziehen.

Bei der Suche in der Datenbank muss anders als im Stand der Technik nicht zwingend davon ausgegangen werden, dass die eingegebenen Zeichen den Beginn eines Wortes oder einer Telefonnummer, oder allgemein eines Datenbankeintrages, bilden. Durch das Übereinstimmungskriterium, welches bei der Suche in der Datenbank zugrundegelegt wird, kann zwar auch eine solche Präfixsuche festgelegt sein, zusätzlich oder alternativ dazu können aber auch eine Infixsuche (die bisher eingegebene Zeichenfolge kann sich auch innerhalb eines Wortes befinden) und/oder eine Suffixsuche (die Zeichenfolge beschreibt das Wortende) festgelegt sein. Im Zusammenhang mit dem erfindungsgemäßen Verfahren hat sich herausgestellt, dass es problemlos möglich ist, den Suchbereich in einer Datenbank durch eine Infixsuche und eine Suffixsuche um ein Vielfaches zu vergrößern, ohne dass ein Benutzer durch eine große Zahl der gefundenen Datenbankeinträge verwirrt wird. Indem weiterhin die Original-Handschrift auf der Anzeigeeinrichtung angezeigt wird, bleibt selbst bei mehrdeutigen Zeichenspuren für den Benutzer erkennbar, wie sich die in der Trefferliste angezeigten Informationen ergeben haben.

Um eine Handschrifterkennungseinrichtung, wie sie aus dem Stand der Technik an sich bekannt ist, dahingehend weiterzubilden, dass sie im Sinne des erfindungsgemäßen Verfahrens zu einer einzelnen Zeichenspur mehrere unterschiedliche Erkennungsergebnisse ermitteln kann, sieht eine Ausführungsform des erfindungsgemäßen Verfahrens vor, durch die Handschrifterkennungseinrichtung zu mehreren möglichen Erkennungsergebnissen jeweils einen Erkennungswert zu ermitteln, welcher ein Maß für eine Übereinstimmung der Zeichenspur mit einem jeweiligen, möglichen Erkennungsergebnis darstellt. Ein solcher Erkennungswert ist im Zusammenhang mit der Mustererkennung eine an sich bekannte Größe. Beispielsweise kann bei einer Handschriftenerkennung auf Grundlage von Hidden-Markov-Modellen (HMM) ein Likelihoodwert oder ein Log-Likelihoodwert ermittelt werden. Gemäß dem Stand der Technik gibt das Handschrifterkennungssystem dann dasjenige mögliche Erkennungsergebnis als das Endergebnis aus, für welches das Maß die größte Übereinstimmung anzeigt.

Es werden bei einem solchen Erkennungssystem gemäß einer Ausführungsform der Erfindung die Erkennungswerte für mehrere mögliche Erkennungsergebnisse zugänglich gemacht. So kann gezielt nach denjenigen möglichen Erkennungsergebnissen gesucht werden, deren Erkennungswert anzeigt, dass die Übereinstimmung zumindest größer als ein vorbestimmtes Mindestmaß ist. Bei einer Zeichenspur für beispielsweise einen Buchstaben kann also nicht nur nach dem ähnlichsten Buchstaben, sondern es können die zwei oder drei ähnlichsten Buchstaben als Erkennungsergebnis ermittelt werden, welche die größte Übereinstimmung mit der vorgegebenen Zeichenspur aufweisen. In den obigen Beispielen würden also zu einem vertikalen Strich I nicht nur beispielsweise der Großbuchstabe I, sondern auch der Kleinbuchstabe I und die Zahl 1 ausgegeben werden, wenn man die drei ähnlichsten Erkennungsergebnisse wählen würde.

Wie bereits eingangs ausgeführt, gehört zu der Erfindung auch eine Eingabevorrichtung für ein elektronisches Gerät eines Kraftwagens. Diese ist dazu eingerichtet, eine Ausführungsform des erfindungsgemäßen Verfahrens durchzuführen.

Der ebenfalls bereits genannte erfindungsgemäße Kraftwagen zeichnet sich durch eine Ausführungsform der erfindungsgemäßen Eingabevorrichtung aus, die in dem Kraftwagen bereitgestellt ist. In dem erfindungsgemäßen Kraftwagen ist dabei die Eingabevorrichtung bevorzugt zum Bedienen eines Navigationsgeräts und/oder eines Infotainmentsystems und/oder eines Mobilfunksystems des Kraftwagens ausgelegt. Damit kann ein Benutzer des Kraftwagens in vorteilhafter Weise über die Eingabevorrichtung in einer Navigationsdatenbank beispielsweise einen Ortsnamen, in einem Infotainmentsystem beispielsweise einen Musiktitel und in einem Mobilfunksystem eine Telefonnummer oder den Namen aus einem Adressbuch durch handschriftliche Eingabe zumindest eines Bestandteils des Suchbegriffes heraussuchen.

Im Folgenden wird die Erfindung noch einmal genauer anhand eines konkreten Ausführungsbeispiels erläutert.

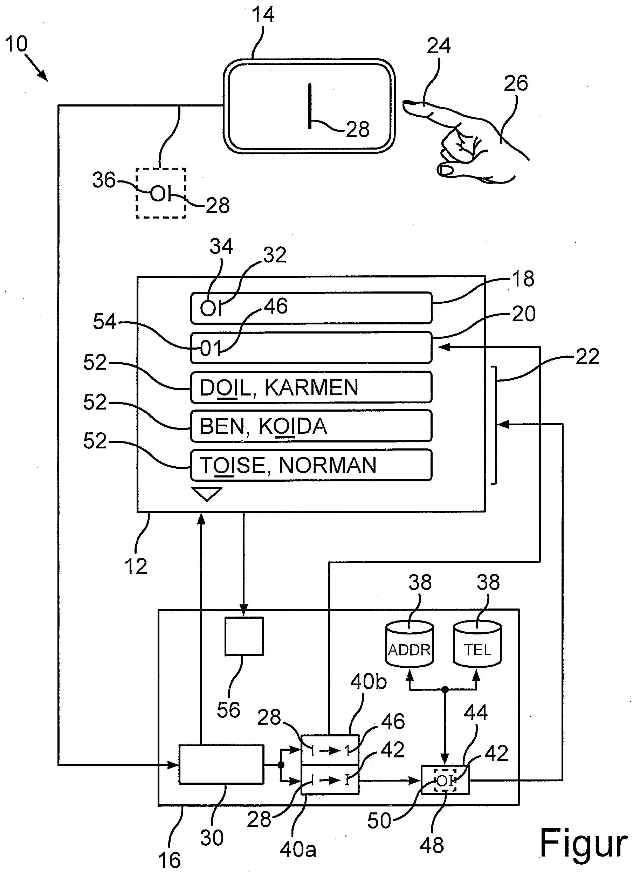

Dazu zeigt die einzige Figur (Fig.) eine Eingabevorrichtung 10, die eine bevorzugte Ausführungsform der erfindungsgemäßen Eingabevorrichtung darstellt. Die Eingabevorrichtung 10 kann beispielsweise in einem Kraftwagen, insbesondere einem Personenkraftwagen, eingebaut sein. Die Eingabevorrichtung 10 kann eine Anzeigeeinrichtung 12, beispielsweise einen Bildschirm mit zugehöriger elektronischer Steuerung, eine Eingabefläche 14, beispielsweise ein Touchpad oder eine auf kapazitiver oder optischer Erfassung beruhendes Zeichenfeld, und ein Steuergerät 16 umfassen. Anstelle des in der Figur gezeigten einzelnen Steuergeräts 16 kann auch ein Verbund mehrerer Steuergeräte bereitgestellt sein. Das Steuergerät 16 kann beispielsweise Bestandteil eines Infotainmentsystems der Kraftwagens sein.

Durch die Anzeigeeinrichtung können einem Benutzer ein Eingabefeld 18 mit einer Handschriftanzeige, eine Telefonzeile 20 (oder auch mehrere Telefonzeilen) für eine Eingabe einer neuen Telefonnummer und eine Trefferliste 22 mit Adressen oder anderen Kontaktdaten angezeigt werden.

In dem der Figur zugrundeliegenden Beispiel möchte der Benutzer eine Telefonnummer oder einen Kontaktnamen eingeben. Hierzu streicht der Benutzer mit einem Finger 24 einer Hand 26 über die Eingabefläche 14 und zeichnet so eine Zeichenspur 28 auf der Eingabefläche 14. Die Sensoren der Eingabefläche 14 erfassen die Zeichenspur 28 und übertragen entsprechende Signale an eine Auswerteeinrichtung 30 des Steuergeräts 16, welche die Signale auswerten. Die Auswerteeinrichtung 30 und die Eingabefläche 14 bilden zusammen eine Erfassungseinrichtung für die Zeichenspur 28.

Auf der Anzeigeeinrichtung 12 wird während der Eingabe eine Anzeige erzeugt, die ein Abbild 32 der Zeichenspur 28 zusammen mit Abbildern 34 von zuvor erfassten Zeichenspuren 36 in der Reihenfolge ihrer Eingabe dargestellt sein können.

Zu der Eingabe des Benutzers wird automatisch geprüft, ob es sich um einen bereits bekannten Kontakt oder eine bereits bekannte Telefonnummer handelt, oder ob der Benutzer einen neuen Telefonbucheintrag eingibt. Hierzu werden Datenbanken 38 des Kraftwagens, z.B. eine Adressdatenbank und eine Telefonnummerndatenbank, nach Datenbankeinträgen durchsucht, die eine Zeichenreihenfolge enthalten, wie sie vom Benutzer mit den eingegebenen Zeichenspuren 28, 36 vorgegeben wird.

Die von der Auswerteeinrichtung 30 aus den Sensorsignalen des Berührungsfelds 14 erzeugten Daten der Zeichenspuren 28, 36 werden dazu auch an eine Handschrifterkennung 40 übertragen. Die Handschrifterkennung 40 weist zwei Komponenten 40a, 40b auf. Die Komponente 40a umfasst einen Zeichenerkennungsalgorithmus, welcher für eine Zeichenerkennung von Buchstaben, Ziffern und weiteren Zeichen derart ausgelegt ist, dass er ein Zeichen unabhängig von seinem Typ (Ziffer oder Buchstabe) gleichermaßen erkennt. Die Komponenten 40b umfasst dagegen einen Zeichenerkennungsalgorithmus, welcher bevorzugt Ziffern erkennt und nur bei einer Zeichenspur, die sehr deutlich einen bestimmten Buchstaben darstellt, auch tatsächlich diesen Buchstaben als Erkennungsergebnis ausgibt.

Die Handschrifterkennung 40 führt in der in der Figur gezeigten Situation, zu der aktuellen Zeichenspur 28 eine Handschrifterkennung durch. Die Komponente 40a erkennt in dem vorliegenden Beispiel in der Zeichenspur 28 den Buchstaben "I". Der erkannte Buchstabe bildet das hier eindeutige Erkennungsergebnis 42 der Handschrifterkennung der Komponente 40a zu der Zeichenspur 28. Das Erkennungsergebnis 42 wird an eine Sucheinrichtung 44 für eine Datenbanksuche weitergeleitet.

Die Komponente 40b erkennt aufgrund ihrer Konfiguration, die eine Ziffernerkennung bevorzugt, in der Zeichenspur 28 die Zahl "1" als ein Erkennungsergebnis 46.

Die Sucheinrichtung 44 ist mit den Datenbanken 38 gekoppelt und dazu ausgelegt, in den Datenbanken 38 zumindest einen Datenbankeintrag zu finden, welcher einen Bestandteil aufweist, der mit einer Suchzeichenkette 48 übereinstimmt, die aus den bisher erkannten Zeichen gebildet ist. Die Suchzeichenkette 48 ist in dem gezeigten Beispiel aus dem aktuellen Erkennungsergebnis 42 sowie dem zu einer vorangegangenen Zeichenspur erkannten Erkennungsergebnis 50 gebildet. In der in der Figur gezeigten Situation wurden bereits die Buchstabenfolge "OI" erkannt. In dem vorliegenden Beispiel ist die Datenbanksuche dazu konfiguriert, in den Datenbanken 38 sowohl mit einer Präfix- als auch einer Infix- und einer Suffixübereinstimmung als Suchkriterium zu suchen. Die Datenbanksuche 44 findet eine Vielzahl von Datenbankeinträgen, die mit der Suchzeichenkette 48, hier also "OI", gemäß dem eingestellten Suchkriterium übereinstimmen.

Die gefundenen Datenbankeinträge 52 werden von der Sucheinrichtung 44 an die Anzeigeeinrichtung 12 übertragen. Die in den gefundenen Datenbankeinträgen 52 erkannten Bestandteile, die mit der Suchzeichenkette 48 übereinstimmen, können markiert sein. Die Anzeigeeinrichtung 12 stellt die gefundenen Datenbankeinträge 52 als die Trefferliste 22 dar. Für den Fall, dass sich der gesuchte Datenbankeintrag unter den gefundenen und in der Trefferliste 22'angezeigten Datenbankeinträgen 52 befindet, kann der Benutzer den gesuchten Namen direkt z.B. durch Antippen auswählen, so dass durch ein Steuerungsmodul 56 z.B. das Mobiltelefon entsprechend für einen Verbindungsaufbau auf der Grundlage des ausgewählten Datenbankeintrags konfiguriert werden kann. Andernfalls kann der Benutzer eine weitere Zeichenspur eingeben, um hierdurch die Datenbanksuche zu präzisieren.

Bei den gezeigten Komponenten des Steuergeräts 16, also der Auswerteeinrichtung 30, der Handschrifterkennung 40, der Sucheinrichtung 44 und dem Steuermodul 56 kann es sich beispielsweise um Programmmodule handeln, welche Bestandteil eines Betriebsprogramms des Steuergeräts 16 sein können. Bei der Handschrifterkennung 40 kann es sich um einen an sich aus dem Stand der Technik bekannten Erkennungsalgorithmus handeln. Die Datenbanksuche durch die Sucheinrichtung 44 kann ebenfalls mittels eines an sich bekannten Suchalgorithmus realisiert sein.

Das von der Komponente 40 b ermittelte Erkennungsergebnis 46 zur Zeichenspur 28 und auch ein zu einer vorangegangenen Zeichenspur 36 ermittelten Erkennungsergebnis 54 werden ebenfalls von der Anzeigeeinrichtung 12 angezeigt, und zwar in der Telefonzeile 20 für eine neue Telefonnummer. Ausgehend von dem leeren Eingabefeld der Zeile 20 werden hierbei durch die Komponente 40 b bei nicht eindeutiger Eingabe, z. B. eines waagrechten Striches "I", von der Komponente 40 b immer Ziffern höher priorisiert als Buchstaben, so dass bei der Eingabe der Zeichenspuren 36, 28: "O, I" in dem gezeigten Beispiel in der Telefonzeile 20 die Ziffern "0, 1" (Erkennungsergebnisse 54, 46) eingefügt wurden.

Die Komponente 40 b kann aber auch umkonfiguriert werden. Wenn der Benutzer z. B. eindeutig den Buchstaben "A" schreibt, übernimmt die Komponente 40 b auch den Buchstaben "A" in die Telefonzeile 20. Nach eindeutiger Eingabe eines solchen Buchstabens geht die Komponente 40 b dann davon aus, dass der Benutzer jetzt Buchstaben für eine Vanity-Nummer eingeben möchte und gibt bei folgenden nicht eindeutigen Zeichenspuren nun bevorzugt Buchstaben als Erkennungsergebnisse aus, die dann ebenfalls in der Telefonzeile 20 angezeigt werden. Erfolgt danach wieder eine eindeutige Zeichenspur einer Ziffer, geht die Komponente 40 b wieder davon aus, dass der Benutzer jetzt weiter Ziffern eingeben möchte und gibt bei nicht eindeutiger Zeichenspur bevorzugt Ziffern als Erkennungsergebnis aus. So lassen sich mit dem System auch neue Vanity-Nummern einfach eingeben. Das manuelle Löschen eines erkannten Zeichens kann in der bereits beschriebenen Weise bei der in der Figur gezeigten Eingabevorrichtung 10 ebenfalls realisiert sein.

Durch das Beispiel ist eine Eingabevorrichtung mit einer Eingabefläche 14 für eine Toucheingabe mit Schrifterkennung beschrieben. Auf dem Eingabefeld 14 kann der Benutzer sowohl Nummern als auch Buchstaben eingeben. Das System erkennt nach einer Suche in Datenbanken 38 für Adressen und gespeicherte Telefonnummern, ob der Benutzer gerade einen Kontakt sucht oder eine neue Telefonnummer eingeben möchte. Bei einer Eingabe von beispielsweise "O" auf der Eingabefläche 14 muss der Benutzer sich anschließend dabei auch nicht entscheiden, ob er eine Zahl Null "0" oder den Großbuchstaben "O" meint. Dieser Schritt der Disambiguierung entfällt ebenfalls. Das System bietet automatisch, soweit erkannt, in der Trefferliste 22 Suchergebnisse für beide Zeichen an und schreibt zusätzlich in der Telefonzeile 20 eine neue Telefonnummer, die dann bevorzugt durch eine Ziffernerkennung anstelle einer Buchstabenerkennung gebildet wird, bis eine eindeutige Buchstabeneingabe erkannt wird.

Insgesamt erfolgt so die Suche in den Adress- und Telefonnummerdatenbanken und die Eingabe einer neuen Telefonnummer schneller, einfacher und intuitiver.

## Patentansprüche

1. Verfahren zum Betreiben einer Eingabevorrichtung (10) für ein elektronisches Gerät eines Kraftwagens, wobei:
- durch eine Erfassungseinrichtung (14, 30) eine Zeichenspur (28, 36) eines Benutzers (26) erfasst wird, während dieser die Zeichenspur (28, 36) zum Eingeben eines Zeichens oder einer Zeichengruppe auf einer Eingabefläche (14) der Erfassungseinrichtung (14, 30) zeichnet,
- durch eine erste Handschrifterkennungseinrichtung (40 a) eine Zeichenerkennung zu der erfassten Zeichenspur (28, 36) durchgeführt wird,
- durch eine Sucheinrichtung (44) zu einem Erkennungsergebnis (42, 50) der Zeichenerkennung in zumindest einer Datenbank (38) jeweils zumindest ein Datenbankeintrag (52) gesucht wird und
- durch eine Anzeigeeinrichtung (12) gefundene Datenbankeinträge (52) angezeigt werden,
wobei durch die erste Handschrifterkennungseinrichtung (40 a) zu der Zeichenspur (28, 36) mehrere unterschiedliche Erkennungsergebnisse ermittelt werden,
**dadurch gekennzeichnet, dass**
durch die Sucheinrichtung (44) zu jedem der unterschiedlichen Erkennungsergebnisse (42) jeweils zumindest ein Datenbankeintrag (52) gesucht wird und dass
durch eine zweite Handschrifterkennungseinrichtung (40 b) zu jeder erfassten Zeichenspur (28, 36) ausschließlich eine Zeichenerkennung für eine Telefonnummerneingabe durchgeführt wird, so dass bei einer Mehrdeutigkeit der Zeichenspur eine Ziffernerkennung gegenüber einer Buchstabenerkennung bevorzugt wird, und durch die Anzeigeeinrichtung (12) ein neuer Telefonnummerneintrag (20) dargestellt wird, welcher mit jedem neuen Erkennungsergebnis (46, 54) der zweiten Handschrifterkennungseinrichtung (40 b) erweitert wird, wobei bei einer eindeutigen Erkennung eines Buchstabens durch die zweiten Handschrifterkennungseinrichtung (40 b) diese umkonfiguriert und hierdurch eine zweite Konfiguration aktiviert wird, durch welche bei einer Mehrdeutigkeit der zu erkennenden Zeichenspur eine Buchstabenerkennung gegenüber einer Ziffernerkennung bevorzugt wird.

2. Verfahren nach Anspruch 1, wobei durch die Erfassungseinrichtung (14, 30) mehrere Zeichenspuren (28, 36) nacheinander erfasst werden und hierbei nach dem Erfassen jeder der Zeichenspuren (28, 36) jeweils a) eine Zeichenerkennung zur aktuellen Zeichenspur (28) durchgeführt wird und b) die Suche in der zumindest einen Datenbank (38) auf der Grundlage der zu mehreren bisher erfassten Zeichenspuren (28, 36) ermittelten Erkennungsergebnissen (42, 50) durchgeführt wird.

3. Verfahren nach einem der vorhergehenden Ansprüche, wobei die zweite Handschrifterkennungseinrichtung (40 b) bei erneuter eindeutiger Erkennung einer Zahl rückkonfiguriert wird.

4. Verfahren nach einem der vorhergehenden Ansprüche, wobei auch durch die zweite Handschrifterkennungseinrichtung (40 b) zu einer Zeichenspur (28, 36) mehrere unterschiedliche Erkennungsergebnisse (46) ermittelt werden und durch die Anzeigeeinrichtung (12) auf der Grundlage der unterschiedlichen Erkennungsergebnisse (46) der zweiten Handschrifterkennungseinrichtung (40 b) mehrere neue Telefonbucheinträge (20) dargestellt werden.

5. Verfahren nach einem der vorhergehenden Ansprüche, wobei durch die Erfassungsrichtung oder ein anderes Bedienelement ein vom Benutzer gegebener Löschbefehl zum Löschen eines zur zuletzt eingegebenen Zeichenspur ermittelten einzelnen Zeichens empfangen wird, durch die Anzeigeeinrichtung das einzelne Zeichen gelöscht wird und bei einem erneuten Erkennen einer Zeichenspur ein von dem gelöschten Zeichen verschiedenes Zeichen als das Erkennungsergebnis bevorzugt wird.

6. Eingabevorrichtung (10) für ein elektronisches Gerät eines Kraftwagens, welche dazu eingerichtet ist, ein Verfahren nach einem der vorhergehenden Ansprüche durchzuführen.

7. Kraftwagen mit einer Eingabevorrichtung (10) nach Anspruch 6.

8. Kraftwagen nach Anspruch 7, wobei die Eingabevorrichtung (10) zum Bedienen eines Navigationsgeräts und/oder eines Infotainmentsystems und/oder eines Mobilfunksystems des Kraftwagens ausgelegt ist.

## Claims

1. Method for operating an input device (10) for an electronic device of a motor vehicle, wherein:
- a character trace (28, 36) of a user (26) is detected by a detection device (14, 30), whilst said user traces the character trace (28, 36) on an input surface (14) of the detection device (14, 30) to input a character or a character group,
- a character recognition for the detected character trace (28, 36) is carried out by a first handwriting recognition device (40 a),
- at least one database entry (52) is searched by a search device (44) for a recognition result (42, 50) of the character recognition in at least one database (38) respectively, and
- found database entries (52) are displayed by a display device (12),
wherein several different recognition results are determined for the character trace (28, 36) by the first handwriting recognition device (40 a),
**characterised in that**
at least one database entry (52) is searched by the search device (44) for each of the different recognition results (42) respectively; and
a character recognition exclusively for a telephone number input is carried out by a second handwriting recognition device (40 b) for each detected character trace (28, 36), such that in the case of an ambiguity of the character trace, a number recognition is preferred over a letter recognition, and a new telephone number entry (20) is displayed by the display device (12), said telephone number entry being extended with each new recognition result (46, 54) of the second handwriting recognition device (40 b), wherein in the case of a clear recognition of a letter by the second handwriting recognition device (40 b), this second handwriting recognition device (40 b) is reconfigured and a second configuration is hereby activated, by which, in the case of an ambiguity of the character trace to be recognised, a letter recognition is preferred over a number recognition.

2. Method according to claim 1, wherein several character traces (28, 36) are detected one after the other by the detection device (14, 30) and here, after the detection of each of the character traces (28, 36), a) a character recognition for the current character trace (28) is carried out and b) the search in the at least one database (38) is carried out on the basis of the recognition results (42, 50) determined for several previously detected character traces (28, 36) respectively.

3. Method according to any one of the preceding claims, wherein the second handwriting recognition device (40 b) is back-configured in the case of new clear recognition of a number.

4. Method according to any one of the preceding claims, wherein several different recognition results (46) are also determined by the second handwriting recognition device (40 b) for a character trace (28, 36) and several new telephone book entries (20) are displayed by the display device (12) on the basis of the different recognition results (46) of the second handwriting recognition device (40 b).

5. Method according to any one of the preceding claims, wherein, using the detection device or another operating element, a delete command provided by the user to delete a single character determined for the last-entered character trace is received, the single character is deleted by the display device and, in the case of a new recognition of a character trace, a different character to the deleted character is preferred as the recognition result.

6. Input device (10) for an electronic device of a motor vehicle, which is configured to carry out a method according to any one of the preceding claims.

7. Motor vehicle having an input device (10) according to claim 6.

8. Motor vehicle according to claim 7, wherein the input device (10) is designed to operate a navigation device and/or an infotainment system and/or a mobile telecommunications system of the motor vehicle.

## Revendications

1. Procédé servant à faire fonctionner un dispositif d'entrée (10) pour un appareil électronique d'un véhicule à moteur :
- un système de détection (14, 30) détectant des caractères tracés (28, 36) d'un utilisateur (26) pendant que ledit utilisateur trace des caractères tracés (28, 36) pour entrer un caractère ou un groupe de caractères sur une surface d'entrée (14) du dispositif de détection (14, 30),
- un premier système de reconnaissance d'écriture (40a) effectuant une reconnaissance de caractères portant sur les caractères tracés (28, 36) détectés,
- un système de recherches (44) recherchant dans au moins une base de données (38) respectivement au moins une entrée de base de données (52) pour un résultat de reconnaissance (42, 50), et
- un système d'affichage (12) affichant des entrées de base de données (52) trouvées,
le premier système de reconnaissance d'écriture (40a) déterminant, pour les caractères tracés (28, 36), plusieurs résultats de reconnaissance différents **caractérisé en ce que**
le système de recherches (44) recherche, pour chacun des résultats de reconnaissance (42) différents, respectivement au moins une entrée de base de données (52),
et **en ce que**
le deuxième système de reconnaissance d'écriture (40b) met en oeuvre, pour respectivement les caractères tracés (28, 36) détectés, exclusivement une reconnaissance de caractères pour une entrée de numéro de téléphone de telle sorte qu'en cas d'ambiguïté des caractères tracés, une reconnaissance de chiffres est préférée par rapport à une reconnaissance de lettres, et **en ce que** le système d'affichage (12) représente une nouvelle entrée de numéro de téléphone (20), qui est complétée avec chaque nouveau résultat de reconnaissance (46, 54) du deuxième système de reconnaissance d'écriture (40b), ledit deuxième système de reconnaissance d'écriture (40b) étant reconfiguré dans le cas d'une reconnaissance sans équivoque d'une lettre par ce dernier, ce qui permet d'activer une deuxième configuration, par laquelle une reconnaissance de lettres est préférée par rapport à une reconnaissance de chiffres en cas d'ambiguïté des caractères tracés à reconnaître.

2. Procédé selon la revendication 1, le système de détection (14, 30) détectant successivement plusieurs caractères tracés (28, 36) et, ce faisant, après la détection de chacun des caractères tracés (28, 36), respectivement a) une reconnaissance de caractères étant effectuée pour les caractères tracés (28) instantanés et b) la recherche dans l'au moins une base de données (38) en se basant sur les résultats de reconnaissance (42, 50) déterminés pour plusieurs caractères tracés (28, 36) détectés jusque-là étant mise en oeuvre.

3. Procédé selon l'une quelconque des revendications précédentes, le deuxième système de reconnaissance d'écriture (40b) étant réinitialisé dans le cas d'une nouvelle reconnaissance sans équivoque d'un chiffre.

4. Procédé selon l'une quelconque des revendications précédentes, le deuxième système de reconnaissance d'écriture (40b) déterminant également, pour des caractères tracés (28, 36), plusieurs résultats de reconnaissance (46) différents et le système d'affichage (12) représentant plusieurs nouvelles entrées d'annuaire (20) en se basant sur les différents résultats de reconnaissance (46) du deuxième système de reconnaissance d'écriture (40b).

5. Procédé selon l'une quelconque des revendications précédentes, le système de détection ou un autre élément de commande recevant une instruction de suppression donnée par l'utilisateur pour supprimer un caractère isolé déterminé pour les caractères tracés entrés en dernier lieu, le système d'affichage supprimant le caractère isolé et un caractère différent du caractère supprimé étant préféré en tant que résultat de reconnaissance dans le cas du renouvellement de la reconnaissance.

6. Dispositif d'entrée (10) pour un appareil électronique d'un véhicule à moteur, lequel dispositif d'entrée est mis au point pour mettre en oeuvre un procédé selon l'une des revendications précédentes.

7. Véhicule à moteur comprenant un dispositif d'entrée (10) selon la revendication 6.

8. Véhicule à moteur selon la revendication 7, le dispositif d'entrée (10) étant configuré pour commander un appareil de navigation et/ou un système d'infodivertissement et/ou un système de radiocommunication mobile du véhicule à moteur.
